# EUROPÄISCHE PATENTSCHRIFT

(11) **EP 2 467 623 B1**
(45) Veröffentlichungstag und Bekanntmachung des Hinweises auf die Patenterteilung: **16.10.2013**
(21) Anmeldenummer: 10732382.6
(22) Anmeldetag: 15.07.2010
(51) Int. Cl.: F16H 7/08

(54) **RINGFEDERELEMENT FÜR EINEN HYDRAULISCHEN RIEMENSPANNER**
ANNULAR SPRING ELEMENT FOR A HYDRAULIC BELT TENSIONER
ELEMENT ELASTIQUE ANNULAIRE POUR TENDEUR DE COURROIE HYDRAULIQUE

(30) Priorität: 20.08.2009 DE 102009038225
(43) Veröffentlichungstag der Anmeldung: 27.06.2012
(73) Patentinhaber: Schaeffler Technologies AG & Co. KG, 91074 Herzogenaurach (DE)
(72) Erfinder: KOWALSKI, Marco, 91074 Herzogenaurach (DE)
(86) Internationale Anmeldenummer: PCT/EP2010/060227
(87) Internationale Veröffentlichungsnummer: WO 2011/020659

(56) Entgegenhaltungen:
- JP-A- 2005 282 672
- JP-A- 2006 046 394

## Beschreibung

### Gebiet der Erfindung

Die Erfindung betrifft ein hydraulisches Spannsystem eines Zugmitteltriebs, umfassend ein topfartiges, einen Zylinder bildendes Gehäuse, zur Aufnahme eines linear verschiebbaren Kolbens, die gemeinsam eine Kolben-Zylinder-Einheit bilden und einen mit Hydraulikfluid gefüllten Druckraum begrenzen. Dabei löst eine Relativbewegung zwischen dem Kolben und dem Zylinder einen Austausch des Hydraulikfluids von dem Druckraum in einen Vorratsraum oder in umgekehrter Richtung aus, und in einem Abströmweg für das Hydraulikfluid zwischen dem Druckraum und dem Vorratsraum ist zumindest ein druckabhängig öffnendes Ringfederventil als Einwegventil eingesetzt.

### Hintergrund der Erfindung

Die in Zugmitteltrieben von Brennkraftmaschinen eingesetzten hydraulischen Spannsysteme erfordern ein schnelles Ansprechverhalten, um in allen Betriebszuständen sowie bei hochfrequenten Schwingungen des Zugmittels stets eine ausreichende Vorspannung und Dämpfung zu gewährleisten. Um dieser Forderung zu entsprechen, sind die in hydr. Spannsystemen integrierten Rückschlagventile so auszulegen, damit nach einem Absteuern des Hydraulikfluids über einen Leckspalt in den Vorratsraum, bei dem durch die Scherkräfte des Hydraulikfluids eine Dämpfung erzeugt wird, der Druckraum kurzzeitig mit Hydraulikfluid aufgefüllt werden kann.

Aus der US 49 40 447 ist ein hydr. Spannsystem bekannt, bei dem zur Dämpfung das Hydraulikfluid zwischen einem Vorratsraum und einem Druckraum über ein Einwegventil oder Rückschlagventil ausgetauscht werden kann. Bei diesem Spannsystem wird als Rückschlagventil ein plattenförmig gestalteter Ventilkörper mit einer zentrischen Öffnung eingesetzt. Das im Einbauzustand nicht ganzflächig abgestützte Ventil kann zu einer instabilen Position des Ventilkörpers führen, mit der Gefahr einer nachteiligen Geräuschentwicklung.

Die Spannvorrichtung gemäß der DE 10 2004 018 566 A1 umfasst ein Einwegventil mit ebenfalls einem scheibenförmigen Ventilkörper. Der konstruktive Aufbau schließt zumindest drei zur Komplettierung des Rückschlagventils erforderliche Einzelteile ein, die ein aufwändiges Herstellverfahren und Händling bei der Montage erfordern.

In bekannten hydr. Spannsystemen erfolgt ein Austausch des Hydraulikfluids abhängig von der Stellbewegung des Kolbens üblicherweise über ein als Kugelrückschlagventil ausgebildetes Einwegventil sowie in umgekehrter Richtung über einen Leckspalt zwischen dem Kolben und dem Zylinder. Die Darstellung eines die Dämpfung des Spannsystems unmittelbar beeinflussenden Leckspaltes zwischen der Kolbenmantelfläche und der Innenwandung des Zylinders einen erhöhten Fertigungsaufwand, um ein Einbauspiel für einen definierten Leckspalt zu realisieren.

Die zu erzeugende Dämpfkraft des hydraulischen Spannsystems ist abhängig von der Leckspaltgröße, von der Viskosität des Hydraulikfluids, die von den Temperaturen beeinflusst wird und von einem impuls, der beispielsweise durch eine Schwingung des Zugmittels auf das hydraulische Spannsystem übertragen wird. In heutigen Spannsystemen erfolgt für die jeweilige Anwendung bzw. Einbausituation des Spannsystems eine Festlegung des Dämpfkraftbereichs, in dem die Viskosität in Abhängigkeit der Temperatur beachtet wird sowie der Leckspalt bzw. die Leckspaltgröße bei der Montage mittels einer Gruppier- und Messvorrichtung hergestellt und montiert wird.

Ein hydraulisches Spannsystem der eingangs genannten Art ist aus der JP 2006 046394 A, die ein hydraulisches Spannsystem nach dem Oberbegriff des Anspruchs 1 offenbart, und der JP 2005 282672 A bekannt.

### Aufgabe der Erfindung

Der vorliegenden Erfindung liegt die Aufgabe zugrunde, für ein hydr. Spannsystem ein bauraum- und bauteiloptimiertes, kostengünstig herstellbares Einwegventil bereitzustellen.

### Zusammenfassung der Erfindung

Zur Lösung dieser Problemstellung ist es vorgesehen, dass zur Bildung des Ringfederventils der Zylinder im Bereich des Druckraums zumindest eine Öffnung aufweist, die mit einem den Zylinder außenseitig umschließenden, in Schließrichtung vorgespannten Federelement zusammenwirkt. Das außenseitig an dem Zylinder geführte Federelement bewirkt bis zum Erreichen eines Öffnungsdrucks eine wirksame Abdichtung der Öffnung und vermeidet damit eine Strömung beziehungsweise einen Austausch des Hydraulikfluids von dem Druckraum in den Vorratsraum.

Das in der Funktion mit einem Überdruckventil vergleichbare Ringfederventil ist so ausgeführt, dass die Vorspannung eines Ringelementes das Ventil schließt und eine Abdichtung bewirkt. Erst nach einem Druck im Druckraum, der eine Rückstellkraft des Ringfederventils übertrifft, erfolgt ein Durchfluss des Hydraulikfluids über das Ringfederventil. Durch die Anwendung des erfindungsgemäßen Ringfederventils in einem hydraulischen Spannsystem kann vorteilhaft die Auslegung und kostenintensive Herstellung eines definierten Leckspaltes entfallen. Neben einer vereinfachten Fertigung stellt sich weiterhin ein reduzierter Bauteilumfang des hydraulischen Spannsystems ein, wodurch insgesamt ein kostenoptimiertes hydraulisches Spannsystem darstellbar ist. Ein weiterer Vorteil der Erfindung besteht darin, dass in Verbindung mit dem Ringfederventil ein hydraulisches Spannsystem vereinfacht an gewünschte Betriebsbedingungen optimal angepasst werden kann. Außerdem bietet die Erfindung die Möglichkeit, eine große Variantenvielfalt der zum Einsatz kommenden hydraulischen Spannsysteme abzudecken. Das erfindungsgemäße Ringfederventil ist bevorzugt für kostenoptimierte Spannsysteme einsetzbar.

Die erfindungsgemäße Ausgestaltung ermöglicht es, dass das hydraulische Spannsystem in verbesserter Weise an den konkreten Bedarfsfall angepasst werden kann. Die benötigte Abstimmung auf eine konkrete Motordynamik kann mit der vorgeschlagenen Ausgestaltung einfach vorgenommen werden, was zu einem insgesamt verbesserten Betriebsverhalten führt, verglichen mit bisherigen Lösungen.

Weitere vorteilhafte Ausgestaltungen der Erfindung sind Gegenstand der abhängigen Ansprüche.

Vorteilhaft schließt der Zylinder in einer Ebene mehrere umfangsverteilt positionierte Öffnungen ein, die in einer Neutralstellung des Kolbens bzw. bis zum Erreichen eines Öffnungsdrucks von dem Federelement wirksam verschlossen sind.

Gemäß der Erfindung bietet es sich an, ein hydraulisches Spannsystem zu schaffen, bei dem die Kolben-Zylinder-Einheit ein erstes als Einwegventil gestaltetes, dem Abströmweg zugeordnetes Ringfederventil sowie ein zweites herkömmliches, als Kugelventil ausgebildetes, dem Zuströmweg zugeordnetes Einwegventil umfasst.

Das Federelement des Ringfederelementes ist bevorzugt in einer außenseitig des Zylinders V-förmig gespreizten Ringnut positioniert. Eine gewünschte schnelle Ansprechbarkeit, d. h. optimale Schalthysterese des Ringfilterelementes wird erreicht, indem das Federelement mit mehreren, relativ großen Öffnungen des Zylinders zusammenwirkt, wodurch der hydraulische Druck im Druckraum der Kolben-Zylinder-Einheit eine größere Fläche des Ringelementes beaufschlagt. Weiterhin verbessert eine vergrößerte Tiefe der Ringnut die Schalthysterese, da ein vergrößerter Stellweg des Federelementes bei auftretendem Überdruck des Hydraulikfluids im Druckraum eine nahezu widerstandsfreie Strömung des Hydraulikfluids sicherstellt.

Als Federelement eignet sich vorzugsweise ein radial vorgespannter Sprengring, der bevorzugt aus einem runden Federdraht hergestellt wird. Die Erfindung ist dabei nicht auf ein Querschnittsprofil für den Federdraht beschränkt, sondern schließt beispielsweise auch ein quadratisches oder rechteckförmiges Querschnittsprofil ein.

Außerdem bietet es sich gemäß der Erfindung an, dass die Öffnung des Zylinders außenseitig mit einem aus Kunststoff hergestellten Federelement zusammenwirkt. Dazu wird ein Werkstoff ausgewählt, der alle Anforderungen hinsichtlich der Dauerfestigkeit und Funktion erfüllt, zur Erzielung einer ausreichenden Lebensdauer des hydraulischen Spannsystems.

Eine bevorzugte konstruktive Ausgestaltung der Erfindung sieht vor, dass der Abströmweg für das Hydraulikfluid als Kanal ausgebildet ist, der die Ringnut des Zylinders zur Aufnahme des Federelementes mit dem Vorratsraum verbindet, der radial von einem die Kolben-Zylinder-Einheit beabstandet umschließenden Gehäuse und dem Zylinder der Kolben-Zylinder-Einheit begrenzt ist. Der Abströmweg für das Hydraulikfluid kann beispielsweise als konzentrische Bohrung zu dem Kolben in der Kolben-Zylinder-Einheit eingebracht werden.

Als Maßnahme um eine dauerhafte Funktion des erfindungsgemäßen Ringfederventils zu gewährleisten, ist das eine Trennfuge aufweisende Federelement lageorientiert eingesetzt. Dazu eignet sich beispielsweise eine dem Zylinder zugeordnete, radial vorstehende Zentriernase, die formschlüssig in die Trennfuge des Federelementes eingreift und damit eine definierte Einbaulage des Federelementes sicherstellt, bei der alle Öffnungen im Zylinder dichtend abgedeckt sind.

### Kurze Beschreibung der Zeichnungen

Ein bevorzugtes Ausführungsbeispiel der Erfindung ist in den Zeichnungen dargestellt, die nachfolgend näher beschrieben werden. Es zeigen:
- Fig. 1: vergrößert dargestellt eine Kolben-Zylinder-Einheit eines hydr. Spannsystems, in Verbindung mit einem erfindungsgemäßen Ringfederventil;
- Fig. 2: den Zylinder der Kolben-Zylinder-Einheit als Einzelteil;
- Fig. 3: ein Federelement des Ringfederventils als Einzelteil;
- Fig. 4: in einer Schnittansicht ein hydr. Spannsystem bekannter Bauweise.

### Detaillierte Beschreibung der Zeichnungen

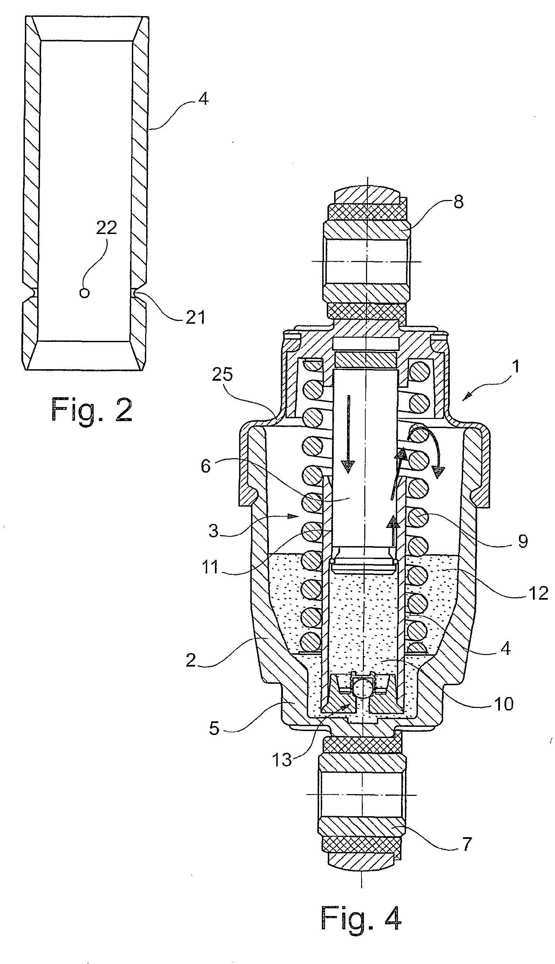

Nachfolgend die Beschreibung eines bekannten hydraulischen Spannsystems 1 gemäß Figur 4. Der Aufbau des Spannsystems 1 umfasst ein topfartig gestaltetes Gehäuse 2, in dem zentrisch eine Kolben-Zylinder-Einheit 3 eingebracht ist. Ein Zylinder 4 ist ortsfest in einem Boden 5 der Kolben-Zylinder-Einheit 3 lagefixiert und zur Aufnahme eines im Zylinder 4 verschiebbaren Kolbens 6 bestimmt. Sowohl das Gehäuse 2 wie auch der Kolben 6 weisen jeweils ein Befestigungsauge 7,8 auf, über die das Spannsystem 1 im Betriebszustand befestigt ist. Eine zwischen dem Boden 5 des Gehäuses 2 und dem Kolben 6 eingesetzte Druckfeder 9 bewirkt eine Spreizkraft, die beispielsweise in Verbindung mit einer mittelbar dem Spannsystem 1 zugeordneten, in Figur 4 nicht abgebildeten Spannrolle ein Zugmittel eines Zugmitteltriebs spannt. Der Zylinder 4 sowie der Kolben 6 der Kolben-Zylinder-Einheit 3 begrenzen einen mit einem Hydraulikfluid gefüllten Druckraum 10. Bei einer Stellbewegung des Kolbens 6 in Pfeilrichtung wird diese Bewegung gedämpft, indem eine Teilmenge des Hydraulikfluids über einen Leckspalt 11 zwischen einer Mantelfläche des Kolbens 6 und einer Innenwandung des Zylinders 4 aus dem Druckraum 10 in einen die Kolben-Zylinder-Einheit 3 umschließenden Vorratsraum 12 verdrängt wird, gemäß den in einer Reihe angeordneten Pfeilen. Bei einer der Pfeilrichtung entgegengesetzten Stellbewegung des Kolbens 6 entsteht im Druckraum 10 eine Druckdifferenz, ein Unterdruck, der ein Nachströmen des Hydraulikfluids aus dem Vorratsraum 12 ermöglicht. Dazu öffnet ein bodenseitig im Zylinder 4 angeordnetes als Kugelventil 13 ausgebildetes Einwegventil bis zur Erreichung eines Druckausgleichs zwischen dem Druckraum 10 und dem Vorratsraum 12. Als Maßnahme zur Abdichtung des Vorratsraums 12 ist eine auch als Gummimembran zu bezeichnende Balgdichtung 25 vorgesehen, die an dem Kolben 6 und dem Gehäuse 2 befestigt ist.

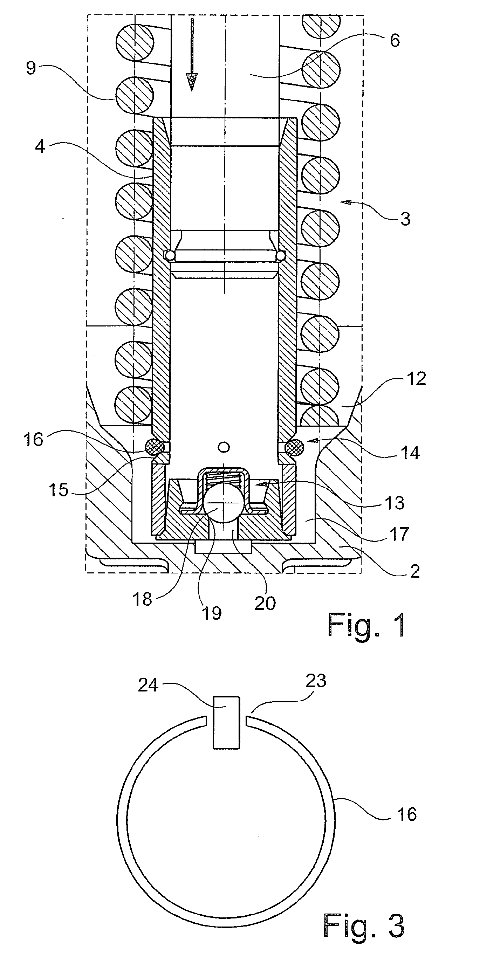

Figur 1 zeigt die Kolben-Zylinder-Einheit 3 in einer vergrößerten Darstellung, die weitestgehend der Figur 4 entspricht. Abweichend zu der bekannten Lösung erfolgt die Dämpfung einer Kolbenstellbewegung in Pfeilrichtung über ein Ringfederventil 14. Dazu ist in dem Zylinder 4 außenseitig eine umlaufende Ringnut 15 eingebracht, die zur Aufnahme eines als Ringfeder ausgebildeten Federelementes 16 bestimmt ist. Sobald ein Druckanstieg in dem Druckraum 10 ein Öffnen des Ringfederventils 14 bewirkt, strömt das Hydraulikfluid aus dem Druckraum 10 über einen Abströmweg 17 in den Vorratsraum 12. Bei einer entgegengesetzten Stellbewegung des Kolbens 6 schließt das Ringfederventil 14 und öffnet das Kugelventil 13. Dabei hebt sich eine federbelastete Kugel 18 von einem Ventilsitz 19 und ermöglicht damit ein Nachströmen des Hydraulikfluid über einen Zuströmweg 20 in den Druckraum 10.

Die Figur 2 verdeutlicht die Lage und Gestaltung der zur Aufnahme des Federelementes 16 bestimmten Ringnut 15 an der Mantelfläche des Zylinders 4. Die V-förmig ausgebildete Ringnut 15 bewirkt eine zentrierte, formschlüssige und damit abgedichtete Anlage des Federelements 16. In dem Zylinder 4 sind im Bereich eines Nutgrunds 21 der Ringnut 15 umfangsverteilt mehrere Öffnungen 22 eingebracht, über die bei geöffnetem Ringfederventil 14 das Hydraulikfluid aus dem Druckraum 10 über den Abströmweg 17 in den Vorratsraum 12 strömt.

In Figur 3 ist das eine Sprengfuge oder Trennfuge 23 aufweisende Federelement 16 abgebildet. Als Federelement 16 eignet sich bevorzugt ein radial vorgespannter Sprengring, der bei geschlossenem Ringfederventil 14 dichtend in der Ringnut 15 eingepasst ist. Zur Erzielung einer lageorientierten Einbaulage greift eine mit dem Gehäuse 2 oder dem Zylinder 4 verbundene Zentriernase 24 formschlüssig in die Trennfuge 23 des Federelements 16.

### Bezugszahlenliste

- 1: Spannsystem
- 2: Gehäuse
- 3: Kolben-Zylinder-Einheit
- 4: Zylinder
- 5: Boden
- 6: Kolben
- 7: Befestigungsauge
- 8: Befestigungsauge
- 9: Druckfeder
- 10: Druckraum
- 11: Leckspalt
- 12: Vorratsraum
- 13: Kugelventil
- 14: Ringfederventil
- 15: Ringnut
- 16: Federelement
- 17: Abströmweg
- 18: Kugel
- 19: Ventilsitz
- 20: Zuströmweg
- 21: Nutgrund
- 22: Öffnung
- 23: Trennfuge
- 24: Zentriernase
- 25: Balgdichtung

## Patentansprüche

1. Hydraulisches Spannsystem (1) eines Zugmitteltriebs, umfassend einen Zylinder (4), der zur Aufnahme eines linear verschiebbaren Kolbens (6) bestimmt ist, die gemeinsam eine Kolben-Zylinder-Einheit (3) bilden und einen mit Hydraulikfluid gefüllten Druckraum (10) begrenzen, wobei eine Relativbewegung zwischen dem Kolben (6) und dem Zylinder (4) einen Austausch des Hydraulikfluids von dem Druckraum (10) in einen Vorratsraum (12) oder in umgekehrter Richtung auslöst und wobei in einem Abströmweg (17) für das Hydraulikfluid zwischen dem Druckraum (10) und dem Vorratsraum (12) zumindest ein druckabhängig öffnendes Ringfederventil (14) als Einwegventil eingesetzt ist, **dadurch gekennzeichnet, dass** zur Bildung des Ringfederventils (14) der Zylinder (4) im Bereich des Druckraums (10) zumindest eine Öffnung (22) aufweist, die mit einem den Zylinder (4) außenseitig umschließenden, in Schließrichtung vorgespannten Federelement (16) zusammenwirkt.

2. Hydraulisches Spannsystem nach Anspruch 1, **dadurch gekennzeichnet, dass** der Zylinder (4) in einer Ebene mehrere umfangsverteilt positionierte Öffnungen (22) umfasst, die in einer Neutralstellung der Kolben-Zylinder-Einheit (3) von dem Federelement (16) verschlossen sind.

3. Hydraulisches Spannsystem nach Anspruch 1 oder 2, **gekennzeichnet durch** die Kolben-Zylinder-Einheit (3), deren Abströmweg (17) das Ringfederventil (14) und deren Zuströmweg ein Kugelventil (13) zugeordnet ist.

4. Hydraulisches Spannsystem nach zumindest einem der Ansprüche 1 bis 3, **dadurch gekennzeichnet, dass** der Zylinder (4) zur Aufnahme des Federelementes (16) außenseitig eine V-förmig gespreizte Ringnut (15) aufweist.

5. Hydraulisches Spannsystem nach zumindest einem der Ansprüche 1 bis 4, **dadurch gekennzeichnet, dass** als Federelement (16) ein radial vorgespannter Sprengring eingesetzt ist.

6. Hydraulisches Spannsystem nach Anspruch 5, **dadurch gekennzeichnet, dass** das Federelement (16) aus einem runden Federdraht hergestellt ist.

7. Hydraulisches Spannsystem nach zumindest einem der Ansprüche 1 bis 6, **dadurch gekennzeichnet, dass** die zumindest eine Öffnung (22) des Zylinders (4) außenseitig mit dem aus Kunststoff hergestellten Federelement (16) zusammenwirkt.

8. Hydraulisches Spannsystem nach Anspruch 4, **dadurch gekennzeichnet, dass** der Abströmweg (17) für das Hydraulikfluid einen Kanal vorsieht, der die Ringnut (15) des Zylinders (4) mit dem Vorratsraum (12) verbindet, der radial von einem die Kolben-Zylinder-Einheit (3) beabstandet umschließenden Gehäuse (2) und dem Zylinder (4) der Kolben-Zylinder-Einheit (3) begrenzt ist.

9. Hydraulisches Spannsystem nach Anspruch 8, **dadurch gekennzeichnet, dass** eine formschlüssige Positionierung zwischen dem Federelement (16) und dem Zylinder (4) oder dem Gehäuse (2) vorgesehen ist.

## Claims

1. Hydraulic tensioning system (1) of a traction mechanism drive, comprising a cylinder (4) which is intended to receive a linearly displaceable piston (6), which together form a piston/cylinder unit (3) and delimit a pressure space (10) which is filled with hydraulic fluid, a relative movement between the piston (6) and the cylinder (4) triggering an exchange of the hydraulic fluid from the pressure space (10) into a reservoir space (12) or in the reverse direction, and at least one annular spring valve (14) which opens in a pressure-dependent manner being inserted as one-way valve in an outflow path (17) for the hydraulic fluid between the pressure space (10) and the reservoir space (12), **characterized in that**, in order to form the annular spring valve (14), the cylinder (4) has at least one opening (22) in the region of the pressure space (10), which opening (22) interacts with a spring element (16) which encloses the cylinder (4) on the outer side and is prestressed in the closing direction.

2. Hydraulic tensioning system according to Claim 1, **characterized in that**, in one plane, the cylinder (4) comprises a plurality of openings (22) which are positioned in a circumferentially distributed manner and are closed by the spring element (16) in a neutral position of the piston/cylinder unit (3).

3. Hydraulic tensioning system according to Claim 1 or 2, **characterized by** the piston/cylinder unit (3), the outflow path (17) of which is assigned the annular spring valve (14) and the inflow path of which is assigned a ball valve (13).

4. Hydraulic tensioning system according to at least one of Claims 1 to 3, **characterized in that** the cylinder (4) has an annular groove (15) on the outer side which is spread in a V-shape for receiving the spring element (16).

5. Hydraulic tensioning system according to at least one of Claims 1 to 4, **characterized in that** a radially prestressed circlip is used as spring element (16).

6. Hydraulic tensioning system according to Claim 5, **characterized in that** the spring element (16) is produced from a round spring wire.

7. Hydraulic tensioning system according to at least one of Claims 1 to 6, **characterized in that** the at least one opening (22) of the cylinder (4) interacts on the outer side with the spring element (16) which is produced from plastic.

8. Hydraulic tensioning system according to Claim 4, **characterized in that** the outflow path (17) for the hydraulic fluid provides a channel which connects the annular groove (15) of the cylinder (4) to the reservoir space (12) which is delimited radially by a housing (2) which encloses the piston/cylinder unit (3) at a spacing and the cylinder (4) of the piston/cylinder unit (3).

9. Hydraulic tensioning system according to Claim 8, **characterized in that** positively locking positioning is provided between the spring element (16) and the cylinder (4) or the housing (2).

## Revendications

1. Système tendeur hydraulique (1) d'un mécanisme à élément de traction, comprenant un cylindre (4) prévu pour recevoir un piston (6) déplaçable linéairement, lesquels forment ensemble une unité cylindre-piston (3) et délimitent un espace de pression (10) rempli de fluide hydraulique, un mouvement relatif entre le piston (6) et le cylindre (4) déclenchant un échange de fluide hydraulique depuis l'espace de pression (10) dans un espace de réserve (12) ou dans le sens inverse et dans une voie d'écoulement (17) pour le fluide hydraulique entre l'espace de pression (10) et l'espace de réserve (12) étant insérée, en tant que soupape unidirectionnelle, au moins une soupape à ressort annulaire (14) s'ouvrant en fonction de la pression, **caractérisé en ce que** pour former la soupape à ressort annulaire (14), le cylindre (4) présente, dans la région de l'espace de pression (10), au moins une ouverture (22) qui coopère avec un élément de ressort (16) précontraint dans la direction de fermeture et entourant le cylindre (4) du côté extérieur.

2. Système tendeur hydraulique selon la revendication 1, **caractérisé en ce que** le cylindre (4) comprend plusieurs ouvertures (22) réparties sur la périphérie dans un plan, lesquelles sont fermées par l'élément de ressort (16) dans une position neutre de l'unité cylindre-piston (3).

3. Système tendeur hydraulique selon la revendication 1 ou 2, **caractérisé par** l'unité cylindre-piston (3), dont la voie d'écoulement (17) est associée à la soupape de ressort annulaire (14) et dont la voie d'afflux est associée à une soupape à bille (13).

4. Système tendeur hydraulique selon au moins l'une quelconque des revendications 1 à 3, **caractérisé en ce que** le cylindre (4), pour recevoir l'élément de ressort (16), présente, du côté extérieur, une rainure annulaire (15) écartée en forme de V.

5. Système tendeur hydraulique selon au moins l'une quelconque des revendications 1 à 4, **caractérisé en ce que** l'on utilise comme élément de ressort (16) un jonc précontraint radialement.

6. Système tendeur hydraulique selon la revendication 5, **caractérisé en ce que** l'élément de ressort (16) est fabriqué en fil métallique à ressort rond.

7. Système tendeur hydraulique selon au moins l'une quelconque des revendications 1 à 6, **caractérisé en ce que** l'au moins une ouverture (22) du cylindre (4) coopère du côté extérieur avec l'élément de ressort (16) fabriqué en plastique.

8. Système tendeur hydraulique selon la revendication 4, **caractérisé en ce que** la voie d'écoulement (17) pour le fluide hydraulique comprend un canal qui relie la rainure annulaire (15) du cylindre (4) à l'espace de réserve (12), lequel espace de réserve est limité radialement par un boîtier (2') entourant l'unité cylindre-piston (3) à distance de celle-ci et par le cylindre (4) de l'unité cylindre-piston (3).

9. Système tendeur hydraulique selon la revendication 8, **caractérisé en ce qu'**il est prévu un positionnement par engagement par coopération de forme entre l'élément de ressort (16) et le cylindre (4) ou le boîtier (2).
